# EUROPÄISCHE PATENTSCHRIFT

(11) **EP 3 849 830 B1**
(45) Veröffentlichungstag und Bekanntmachung des Hinweises auf die Patenterteilung: **10.01.2024**
(21) Anmeldenummer: 19765169.8
(22) Anmeldetag: 31.07.2019
(51) Int. Cl.: B60G 3/14, B60G 7/00, B60K 7/00, B60K 11/06, B60T 1/06, F16D 55/226, F16D 65/00, B60T 17/08, F16D 55/00, F16D 65/18

(54) **SCHRÄGLENKERRADAUFHÄNGUNG FÜR EIN ÜBER EINEN ELEKTRISCHEN ODER PNEUMATISCHEN MOTOR ANGETRIEBENES RAD**
SEMI-TRAILING ARM WHEEL SUSPENSION FOR A WHEEL DRIVEN BY AN ELECTRIC OR PNEUMATIC MOTOR
SUSPENSION DE ROUE À BRAS OBLIQUE POUR UNE ROUE ENTRAÎNÉE PAR L'INTERMÉDIAIRE D'UN MOTEUR ÉLECTRIQUE OU PNEUMATIQUE

(30) Priorität: 12.09.2018 DE 102018215535; 10.10.2018 DE 102018217348
(43) Veröffentlichungstag der Anmeldung: 21.07.2021
(73) Patentinhaber: Ziehl-Abegg Automotive GmbH & Co. KG, 74635 Kupferzell (DE)
(72) Erfinder: BIFANO, Natale Cosmo, 60598 Frankfurt (DE); SIAMENAU, Dzmitry, 74523 Schwäbisch Hall (DE)
(74) Vertreter: Ullrich & Naumann PartG mbB
(86) Internationale Anmeldenummer: PCT/DE2019/200094
(87) Internationale Veröffentlichungsnummer: WO 2020/052718

(56) Entgegenhaltungen:
- WO-A1-2017/098492
- DE-A1-102013 214 737
- DE-A1-102015 213 354
- DE-A1-102015 213 356
- DE-A1-102016 223 374
- DE-T2- 60 101 875
- DE-U1-202017 001 665
- US-A1- 2003 230 443
- "Schräglenkerachse", Wikipedia , 24. September 2017 (2017-09-24), XP002796342, Gefunden im Internet: URL:https://de.wikipedia.org/w/index.php?t itle=Schr%C3%A4glenkerachse&oldid=16937761 0 [gefunden am 2019-11-10]

## Beschreibung

Die Erfindung betrifft eine Schräglenkerradaufhängung für ein über einen elektrischen oder pneumatischen Motor angetriebenes Rad eines Fahrzeugs, insbesondere Hinterrad eines Nutzfahrzeugs nach dem Oberbegriff des Anspruchs 1.

Schräglenkerradaufhängungen der in Rede stehenden Art sind seit Jahren aus der Praxis bekannt, beispielsweise aus den Dokumenten DE 20 2017 001 665 U1 und US 2003/230443 A1. DE 601 01 875 T2 offenbart eine Befestigung von zwei Bremsvorrichtungen an einer Schwinge, allerdings an einem Schwingarm eines Motorrollers.

Insbesondere für Hinterachsen sind 1-Lenker-Aufhängungen verbreitet, beispielsweise Längslenker- oder Schräglenkeraufhängungen. Bei diesen Aufhängungen ist das Rad über lediglich einen sogenannten Lenker - die Schwinge - schwenkbar am Fahrzeug gelagert. Bei diesen 1-Lenker-Aufhängern können im Betrieb auftretende Längs- und Querkräfte am günstigsten aufgefangen werden, wenn die Schwinge schräg angeordnet ist (Schräglenkeraufhängung) und aufbauseitig zwei Lagerstellen mit großem Abstand zueinander aufweist. Dabei kann eine Schwenkachse der Schwinge in einer horizontalen Ebene schräg zu einer Fahrzeugquerachse verlaufen (Pfeilungswinkel) und in einer horizontalen Ebene schräg zu der Fahrzeugquerachse verlaufen (Dachwinkel). Durch Manipulation des Pfeilungswinkels und/oder des Dachwinkels lässt sich beispielsweise das Wankzentrum, die Spurweitenänderung, die Bremsnickabstützung und die Sturzänderung gezielt manipulieren.

Begrenzt wird diese Manipulierbarkeit dadurch, dass die linken und rechten Räder einer Achse bei Schräglenkerradaufhängungen nach dem Stand der Technik durch den Antriebsstrang - regelmäßig über ein Differentialgetriebe - miteinander gekoppelt sind. Durch Wechselwirkungen zwischen den Rädern lässt sich das Fahrzeugverhalten nur begrenzt beherrschen.

Die bekannten 1-Lenker-Aufhängungen und insbesondere Schräglenkerradaufhängungen sind in der Regel auf umständliche Weise am Fahrzeug abgestützt.

Insbesondere muss die Schwinge für jede herzustellende Art von Schräglenkerradaufhängung in Abhängigkeit von der jeweiligen Geometrie des Fahrzeugs und dem jeweils einzusetzenden Schwingungsaufnehmer angepasst werden.

Somit steigen die Herstellungskosten, und der Aufwand beim Anpassen und Einstellen der Bauteile auf ein jeweiliges Fahrzeug ist hoch.

Der vorliegenden Erfindung liegt daher die Aufgabe zugrunde, eine Schräglenkerradaufhängung der eingangs genannten Art zu vereinfachen und kostengünstigere Weise auszugestalten und weiterzubilden.

Erfindungsgemäß wird die voranstehende Aufgabe durch die Merkmale des Anspruches 1 gelöst. Danach ist eine Schräglenkerradaufhängung für ein über einen elektrischen oder pneumatischen Motor angetriebenes Rad eines Fahrzeugs angegeben. Die Schräglenkerradaufhängung ist dadurch gekennzeichnet, dass an einem dritten Bereich der Schwinge eine erste Bremsvorrichtung und eine zweite Bremsvorrichtung angebracht sind.

Das angetriebene Rad ist insbesondere das Hinterrad eines Nutzfahrzeugs. Dabei kann es sich beispielsweise um Niederflurfahrzeuge wie Stadtbusse und Flughafenbusse, um Doppeldecker, oder um andere Nutzfahrzeuge handeln.

Die Schräglenkerradaufhängung umfasst einen elektrischen oder pneumatischen Motor und eine Schräglenkerschwinge, die in einem ersten Bereich um eine Schwenkachse schwenkbar an dem Fahrzeug gelagert ist, und in einem zweiten Bereich über einen Schwingungsaufnehmer an dem Fahrzeug abgestützt ist. Die Schwinge weist eine Schnittstelle zur Anbindung von unterschiedlichen Arten von Schwingungsaufnehmern auf.

Auf diese Weise lassen sich je nach Anwendungsfall unterschiedliche Arten von Schwingungsaufnehmen flexibel in die Schräglenkerradaufhängung integrieren. Dies kann insbesondere von der Art des Fahrzeugs oder Nutzfahrzeugs abhängig sein. Der jeweilige Schwingungsaufnehmer kann somit individuell kompatibel für einzelne Fahrzeugklassen oder Fahrzeugtypen ausgewählt und einheitlich über die Schnittstelle angebunden werden. Durch das Schaffen einer universellen Schnittstelle ist die Schräglenkerradaufhängung ferner für zukünftige Technologien nachrüstbar. Auch die Reparatur und der Austausch von Schwingungsaufnehmern wird vereinfacht, so dass die Lebensdauer der Schräglenkerradaufhängung steigt. Auch die Komplexität und die Kosten der Herstellung sinken mit der Vielfalt an Teilen, die für verschiedene Baureihen konstruiert und vorgehalten werden müssen.

Vorzugsweise ist der Schwingungsaufnehmer direkt oder über einen Adapter an der Schnittstelle angebunden. In letzterem Fall kann die Schnittstelle angepasst sein, um daran einen von einer Mehrzahl von sich unterscheidenden Adaptern zu befestigen. Da verschiedene Schwingungsaufnehmer unterschiedliche Konstruktionen zur Anwendung haben, kann für jeden Schwingungsaufnehmer ein entsprechender Adapter die Kompatibilität mit der universellen Schnittstelle sicherstellen. Jeder der unterschiedlichen Adapter kann dabei jeweils angepasst sein, um einen oder mehrere von sich unterscheidenden Schwingungsaufnehmer daran anzubringen. Während also die Schnittstelle in jedem Fall auf dieselbe Weise ausgebildet ist, ist der Adapter jeweils auf eine Art von Schwingungsaufnehmer ausgelegt. Der Schwingungsaufnehmer kann also an die jeweilige Fahrzeugarchitektur angepasst werden, um eine Variabilität und Flexibilität in der Fahrzeugkonstruktion zu erreichen.

Dabei kann die Schnittstelle Aussparungen und/oder Materialanhäufungen umfassen, die den Adapter ausrichten und/oder Kräfte übertragen. Auf diese Weise ist für jede Art von Adapter die richtige Anwendung gewährleistet. Zudem ist die Montage vereinfacht.

Die Schnittstelle kann insbesondere als eine von dem ersten Bereich weg zeigende Stirnfläche der Schwinge ausgebildet sein. Da die Schwenkachse bei 1-Lenker-Aufhängungen für gewöhnlich in Fahrtrichtung vorn angeordnet ist, zeigt die Stirnfläche in der Regel nach hinten, wobei auch der umgekehrte Fall möglich ist. Mit den Abständen zwischen der Schwenkachse der Schwinge, der Radträgerachse und dem Schwingungsaufnehmer lassen sich durch die jeweils verwirklichten Hebelarme vorteilhafte Konstruktionen zur Aufnahme der Fahrkräfte finden. Hierbei kann der Adapter verwendet werden, um den Angriffspunkt des Schwingungsaufnehmers näher an der Schwenkachse oder weiter davon entfernt zu positionieren. Die Schnittstelle kann weiter Bohrungen für Befestigungselemente umfassen, insbesondere für Schrauben. Beispielsweise kann die Stirnfläche allgemein die Form eines abgerundeten Vierecks aufweisen und vier Bohrungen umfassen. Vorzugsweise kann jede der Bohrungen mit einem Gewinde versehen sein. Auch eine Befestigung mit anderen lösbaren Befestigungsmitteln oder mit Nieten ist möglich.

Vorzugsweise sind also Schnittstelle und/oder Adapter ausgebildet, um ein Baukastensystem zu verwirklichen. Dies kann beispielsweise durch betriebsinterne oder betriebsübergreifende Normung oder Vereinheitlichung der Abmessungen entsprechender Bauteile geschehen, insbesondere des Adapters und der Schwingungsaufnehmer.

Weiter vorzugsweise ist der Schwingungsaufnehmer eine pneumatische Feder-Dämpfer-Vorrichtung. Dies kann insbesondere durch eine Luftfederung verwirklicht sein. Durch Einstellung des Balgdrucks der Luftfederung lässt sich die Fahrzeughöhe konstant halten oder zum Auf- und Abladen von Transportgütern oder für das Ein- und Aussteigen von Fahrgästen kontrolliert anpassen. Dabei bleibt die Fähigkeit zur Aufnahme von Schwingungen über einen weiten Einstell- und Regelbereich nahezu gleich.

Hierbei kann der Adapter insbesondere als eine Verlängerung der Schwinge ausgebildet ist und in Richtung weg von der Schwinge zulaufen, und an seinem Ende eine im Wesentlichen horizontale Fläche aufweisen, an der ein mechanisches Luftfederelement und vorzugsweise ein Dämpferelement der pneumatischen Feder-Dämpfer-Vorrichtung angekoppelt sind. Somit besteht die Möglichkeit, Federelement und Dämpferelement hier jeweils als einzelnes Bauteil aufzunehmen.

Allerdings ist die Steifigkeit bei Luftfederungen lediglich innerhalb eines sehr kleinen Einstellbereichs variabel einstellbar. Somit ist es bei der Verwendung von pneumatischen Feder-Dämpfer-Vorrichtungen erforderlich, für verschiedene Bauraumbedingungen und Fahrbahnqualitäten unterschietliche Komponenten verbauen müsste, die Teilevielfalt und die Kosten erhöht. Für ein Baukastensystem sind deshalb auch andere Schwingungsaufnehmer vorteilhaft.

So kann der Schwingungsaufnehmer insbesondere eine hydraulische, hydropneumatische, elektrische, elektromechanische oder elektrohydraulische Feder-Dämpfer-Vorrichtung sein. Hierbei ist der Adapter vorzugsweise in Gestalt eines Plättchens ausgebildet, das an einem unteren Ende eine in Gestalt zweier Erhöhungen ausgebildete Lagergabel für die Feder-Dämpfer-Vorrichtung aufweisen kann.

Da Feder-Dämpfer-Vorrichtungen nur einen Freiheitsgrad aufweisen - nämlich den, durch Kontraktion und Ausdehnung Bewegungen ihrer beiden Anbindungspunkte aufeinander zu und voneinander weg zuzulassen - sind Feder-Dämpfer-Vorrichtungen an ihren Enden für gewöhnlich gelenkig gelagert, da ein Winkel der Längsachse der Federdämpfervorrichtung beim einfedern sowohl relativ zu Schwinge als auch relativ zum Fahrzeug veränderbar sein muss. Eine solche gelenkige Lagerung kann zwischen den beiden Erhöhungen der Lagergabel verwirklicht sein.

Bevorzugt kann die Lagerung der Schwinge am Fahrzeug mittels zweier Gummilager im ersten Bereich der Schwinge ausgebildet sein, die direkt oder über einen Hilfsrahmen an der Karosserie gelagert sind, vorzugsweise über eine Drehstabfeder. Hierbei kann die Feder Dämpfervorrichtung mit der Drehstabfeder zusammenwirken. In einer Ausführungsform kann der Schwingungsaufnehmer lediglich ein Dämpfer sein, wobei die Federfunktion allein von der Drehstabfeder erfüllt wird.

In weiteren Ausgestaltungen kann eine Schräglenkerradaufhängung für ein über einen elektrischen oder pneumatischen Motor angetriebenes Rad eines Fahrzeugs, insbesondere Hinterrad eines Nutzfahrzeugs, eine Schwinge aufweisen, die in einem ersten Bereich an dem Fahrzeug gelagert ist, und in einem zweiten Bereich an dem Fahrzeug abgestützt ist. Ein dritter Bereich der Schwinge kann einen gegenüber der Schwinge drehfesten Teil des Motors tragen, um mit einem drehenden Teil des Motors auf das Rad ein Drehmoment zu übertragen.

Der Motor treibt somit lediglich ein Rad des Fahrzeugs an. Anstelle einer komplizierten Lagerung einer Antriebswelle in der Schwinge ist der Motor direkt mit der Schwinge verbunden. Diese Lösung ist platzsparend, denn ein Antriebsstrang entfällt komplett, so dass im Bodenbereich des Fahrzeugs sehr viel mehr Bauraum für andere Zwecke oder Bauteile zur Verfügung steht, beispielsweise um Batterien im Fahrzeugunterbau unterzubringen. Somit ist einerseits die Energieversorgung des Motors über kurze Zuleitungswege gesichert, andererseits wird der Schwerpunkt des gesamten Fahrzeugs nach unten verlagert. Durch einen tiefen Scherpunkt lassen sich auch elektrisch oder pneumatisch betriebene Nutzfahrzeuge in Leichtbauweise herstellen und noch energiesparender ausbilden.

Der Motor kann auf der zur Fahrzeugmitte gerichteten Seite der Schwinge sitzen und das Rad mittels einer Welle antreiben, die durch die Schwinge hindurch läuft. Hierbei kann es sich insbesondere um einen Innenläufer handeln, der bevorzugt permanent erregt ist. Der außen befindliche Teil sitzt dann als stehender Teil des Motors auf der Schwinge.

Vorzugsweise ist der Motor als Radnabenantrieb ausgebildet. Dabei kann es sich um einen getriebelosen permanenterregten Synchronmotor (PMSM) mit Außenläufer handeln, denkbar ist allerdings auch die Verwendung von anderen Antriebskonzepten mit Vorgelegegetrieben oder Planetengetrieben.

Diese Ausgestaltung des Motors als Radnabenantrieb ist besonders platzsparend, da sowohl der stehende und der drehende Teil des Motors als auch das Rad außenseitig, bzw. radseitig auf der Schwinge sitzen, sodass die gesamte Schräglenkerradaufhängung noch platzsparender ausgeführt ist. Bei der Verwendung der Schräglenkerradaufhängung in Stadtbussen oder Flughafenbussen wird somit nicht nur eine noch niedrigere und noch fahrgastfreundlichere Niederflurbauweise ermöglicht. Vielmehr lässt sich durch Wegfall der Vorgelegegetriebe zudem eine größere Durchgangsbreite zwischen zwei Schräglenkerradaufhängungen einer Achse, beispielsweise der Hinterachse, realisieren. Das Fahrzeug wäre somit auf seiner gesamten Länge für beispielsweise Kinderwägen oder Rollstühle nutzbar.

Ferner lassen sich auch bereits im Betrieb befindliche Fahrzeuge, die mit herkömmlichen Antriebssträngen und einer 1-Lenker- Aufhängung versehen sind, mit einer erfindungsgemäßen Schräglenkerradaufhängung einfach und kostengünstig auf einen Elektroantrieb beziehungsweise auf einen pneumatischen Antrieb umrüsten. Die dafür benötigten Batterien lassen sich dann beispielsweise im anstelle des Antriebsstrangs im Fahrzeugunterbau, oder dort, wo sich zuvor der Verbrennungsmotor befunden hat, unterbringen und je nach Art des Nutzfahrzeugs anforderungsgerecht dimensionieren, um eine erforderliche Reichweite des Nutzfahrzeugs gewährleisten zu können.

Durch das Wegfallen der Elemente des Antriebsstrangs lassen sich trotz elektrischem oder pneumatischen Motor die radgefederten Massen reduzieren. Die Räder federn durch die jeweilige Schräglenkerradaufhängung vollkommen unabhängig voneinander ein, und lassen sich durch den jeweiligen Motor vollkommen unabhängig voneinander ansteuern und bewegen, so dass das Schwingungsverhalten des Fahrzeugs verbessert werden kann.

Die Schwinge ist eine Schräglenkerschwinge für eine Schräglenkerradaufhängung. Durch entsprechende Dimensionierung sind Schräglenkerradaufhängungen in der Lage, die beim Fahren auftretenden Längs- und Querkräfte besonders vorteilhaft aufzunehmen und die Fahrwerkskinematik zu verbessern.

Vorzugsweise ist die Schwinge mit einem Pfeilungswinkel der in einem ersten Winkelbereich zwischen 10° und 25° liegt und mit einem Dachwinkel, der in einem zweiten Bereich zwischen 0° und 5° liegt. In diesen Winkelbereichen führt die Verwendung von Schräglenkeraufhängungen zu einem besonders geringen Reifenverschleiß und einem vorteilhaften Wankverhalten.

Weiter vorzugsweise kann der erste Bereich der Schwinge als Hohlkörper ausgebildet sein. Somit lässt sich der Schräglenker unter Einsatz der Gusstechnologie herstellen. Möglich ist jedoch auch die Herstellung mit Blechteilen und durch Schweißen oder mittels 3D-Druck der Schwinge. Die Schwinge kann aus Metall, vorzugsweise aus Stahl- oder Eisenguss bestehen, wobei auch Ausgestaltungen unter Einsatz von Aluminium, faserverstärkten Kunststoffen (FVK) oder ähnlichen Werkstoffen denkbar sind. Vorzugsweise kann die Schwinge innerhalb des vorderen Bereich eine Gitter- oder Rippenstruktur aufweisen, was die Stabilität der Schwinge steigert. Der dritte Bereich kann in Vollmaterial ausgebildet sein. Der zweite Bereich kann je nach Anwendungsfall in Vollmaterial oder als Hohlkörper, gegebenenfalls mit einer Gitter- oder Rippenstruktur, ausgebildet sein. Somit lässt sich beispielsweise eine Gewichtsreduktion erreichen. In einer Ausführungsform kann der zweite Bereich gleich dem dritten Bereich sein.

Ferner kann entlang der Schwinge mindestens eine Leitung verlaufen. Hierbei kann es sich um Versorgungs- und/oder Steuerleitungen handeln, insbesondere für den Motor. Die Leitungen können beispielsweise Hydraulikleitungen sein, oder der Energieversorgung, insbesondere auf elektrische oder pneumatisch Weise, der Kühlung, der Kommunikation oder anderen Zwecken dienen. Mehrere Leitungen können zusammen oder getrennt entlang der Schwinge verlaufen oder auch in Gestalt eines Kabelbaums zu einer großen Leitung verbunden sein.

In vorteilhafter Weiterbildung verläuft die Leitung in einer Aussparung in der Schwinge oder ist an der Schwinge befestigt. Weiter vorzugsweise weist die Schwinge in ihrem dritten Bereich einen Durchgang für die Leitung auf, durch den eine Anbindung an den Motor herstellbar ist.

Ebenso kann die Leitung in Gestalt eines oder mehrerer in die Schwinge integriertem Kanals ausgebildet sein. Diese Ausgestaltung kann in der Gussform vorgesehen sein. Durch eine geschickte Ausgestaltung, beispielsweise in Kombination mit einer Gitter-oder Rippenstruktur in als Hohlkörper ausgeführten Bereichen der Schwinge können die integrierten Kanäle in Gestalt eines Wärmetauschers zur Kühlung des Motors ausgebildet sein, wobei innerhalb und/oder außerhalb der Schwinge Elemente des Wärmetauschers vorgesehen sein können.

Nach einer vorteilhaften Ausführungsform kann die Schwinge an ihrem dritten Bereich eine nach außen gerichtete kegelförmige Fläche umfassen, um den Motor anzubringen. Hierbei kann es sich insbesondere um eine konische Außenfläche eines Zylinders bzw. eines Hohlzylinders handeln, auf welche der stehende Teil des Motors aufgeschoben, aufgepresst oder anderweitig daran fixiert werden kann. Vorzugsweise kann die Lagerung der Schwinge am Fahrzeug mittels zweier Gummilager im ersten Bereich der Schwinge ausgebildet sein. Die Lagerung kann über einen Hilfsrahmen beziehungsweise einen Fahrschemel, erfolgen. Zudem kann die Lagerung der Schwinge über eine Drehstabfeder erfolgen.

In weiteren Ausgestaltungen kann eine Schräglenkerradaufhängung für ein über einen elektrischen oder pneumatischen Motor angetriebenes Rad eines Fahrzeugs, insbesondere Hinterrad eines Nutzfahrzeugs, eine Schwinge aufweisen, die in einem ersten Bereich an dem Fahrzeug gelagert ist, und in einem zweiten Bereich an dem Fahrzeug abgestützt ist. Erfindungsgemäß ist kann eine erste Bremsvorrichtung in einem dritten Bereich an der Schwinge angebracht.

Durch das direkte Anbringen der Bremsvorrichtung an der Schwinge ist die erste Bremsvorrichtung für Wartungs- und Austauscharbeiten leichter zugänglich. Ferner erübrigt sich eine kompliziertere Aufhängung von Bremskomponenten, die bei Schräglenkerradaufhängungen nach dem Stand der Technik an einem separaten Radträgerelement angebunden sind. Das direkte Anbringen der Bremsvorrichtung an der Schwinge spart zudem Bauraum und vereinfacht die Schräglenkerradaufhängung durch den Wegfall eines Radträgerelements. Vorzugsweise kann die erste Bremsvorrichtung ein Bremssattel einer Scheibenbremse sein. Hierbei kann es sich um eine pneumatische Scheibenbremse handeln, so wie es bei Nutzfahrzeugen nach dem Stand der Technik üblich ist. Vorzugsweise ist die Scheibenbremse hydraulisch oder hydropneumatisch ausgeführt, allerdings sind auch elektrische, elektromechanische sowie elektrohydraulische Bremsvorrichtungen denkbar.

Weiter vorzugsweise kann die Schwinge eine Aussparung und/oder eine Materialanhäufung aufweisen, um eine Bremsscheibe der Scheibenbremse wenigstens teilweise zu umschließen. Dadurch kann die Bremsscheibe geschützt werden, beispielsweise vor Steinschlag oder anderen Störeinflüssen auf einer Fahrbahn - wie zum Beispiel Schnee und Eis, Geäst und Gestrüpp, Schlaglöcher und Fahrbahnunebenheiten. Die Bremsscheibe ist vorzugsweise drehfest mit dem drehenden Teil des Motors verbunden, sodass eine auf die Bremsscheibe aufgeprägte Bremskraft direkt ein Bremsdrehmoment auf das Rad überträgt.

Erfindungsgemäß ist der dritte Bereich der Schwinge ferner ausgebildet, um eine zweite Bremsvorrichtung daran zu anzubringen. Die zweite Bremsvorrichtung ist vorzugsweise nicht ebenfalls als Bremssattel einer Scheibenbremse ausgebildet, sondern kann auch eine andere Art von Bremsvorrichtung umfassen.

Insbesondere kann die zweite Bremsvorrichtung eine Parkbremsvorrichtung sein.

Dabei kann es sich um eine Feststellbremse handeln, die ebenfalls auf die Bremsscheibe wirken kann.

Vorzugsweise können die erste Bremsvorrichtung und die zweite Bremsvorrichtung jeweils auf einer Oberseite und einer Unterseite der Schwinge ankoppelbar sein, oder umgekehrt. Beispielsweise kann die erste Bremsvorrichtung als Bremssattel ausgebildet sein, und sich auf der Oberseite der Schwinge befinden. Die als Parkbremsvorrichtung ausbildete zweite Bremsvorrichtung kann auf der Unterseite der Schwinge befestigt sein. Durch eine derartige geschickte Ausgestaltung des dritten Bereichs der Schwinge wird eine zweiseitige "TWO FACE" Bremsanbindung sowohl oben als auch unten an der Schwinge verwirklicht.

Weiter vorzugsweise kann die erste Bremsvorrichtung und/oder die zweite Bremsvorrichtung über eine Schnittstelle und/oder über einen Bremsadapter an dem dritten Bereich anbringbar sein, um ein Baukastensystem zu verwirklichen. Dabei können unterschiedliche Bremsvorrichtungen beispielsweise über Durchgangsbohrungen oder Gewindebohrungen an Schnittstelle oder Bremsadapter angebunden werden. Das Baukastensystem kann insbesondere modular ausgebildet sein, also mit universellen oder einheitlichen Schnittstellen für die Anbindung verschiedener Bremsvorrichtungen für verschiedene Anwendungsfälle, beispielsweise für die Anwendung in LKW's, Bussen, oder anderen Nutzfahrzeugen.

In bevorzugter Weitergestaltung kann ein Fahrzeug vorzugsweise eine entsprechende zweite Achse, insbesondere eine lenkbare Vorderachse aufweisen, die auf dieselbe Weise gefedert ist, beispielsweise ebenfalls mit einer pneumatischen, hydraulischen, hydropneumatischen, elektrischen, elektromechanischen oder elektrohydraulischen Feder-Dämpfer-Vorrichtung.

Mit dem modularen Baukastensystem lassen sich vielfältige Kombinationen aller verfügbaren Technologien aus den Bereichen der Pneumatik, der Hydraulik und der Elektrik besonders nah am Kundenwunsch realisieren. So ist beispielsweise denkbar, für einige besondere Anwendungen einen Schwingungsaufnehmer an dem dritten Bereich beziehungsweise an dem Bremsadapter anzubringen.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: eine perspektivische Ansicht einer erfindungsgemäßen Schräglenkerradaufhängung mit einem Motor,
- Fig. 2: eine perspektivische Ansicht einer erfindungsgemäßen Schräglenkerradaufhängung ohne Motor,
- Fig. 3: eine perspektivische Ansicht einer erfindungsgemäßen Schräglenkerradaufhängung mit Motor und ohne Bremssattel,
- Fig. 4: eine perspektivische Ansicht einer erfindungsgemäßen Schräglenkerradaufhängung ohne Motor und ohne Bremssattel,
- Fig. 5: eine perspektivische Ansicht einer erfindungsgemäßen Schräglenkerradaufhängung mit einer pneumatischen Federdämpfervorrichtung,
- Fig. 6: eine perspektivische Ansicht einer erfindungsgemäßen Schräglenkerradaufhängung mit einem Adapter für eine pneumatische Federdämpfervorrichtung,
- Fig. 7: eine perspektivische Ansicht einer erfindungsgemäßen Schräglenkerradaufhängung mit einer hydropneumatischen Federdämpfervorrichtung, und
- Fig. 8: eine perspektivische Ansicht einer erfindungsgemäßen Schräglenkerradaufhängung mit einem Adapter für eine hydropneumatische Federdämpfervorrichtung.

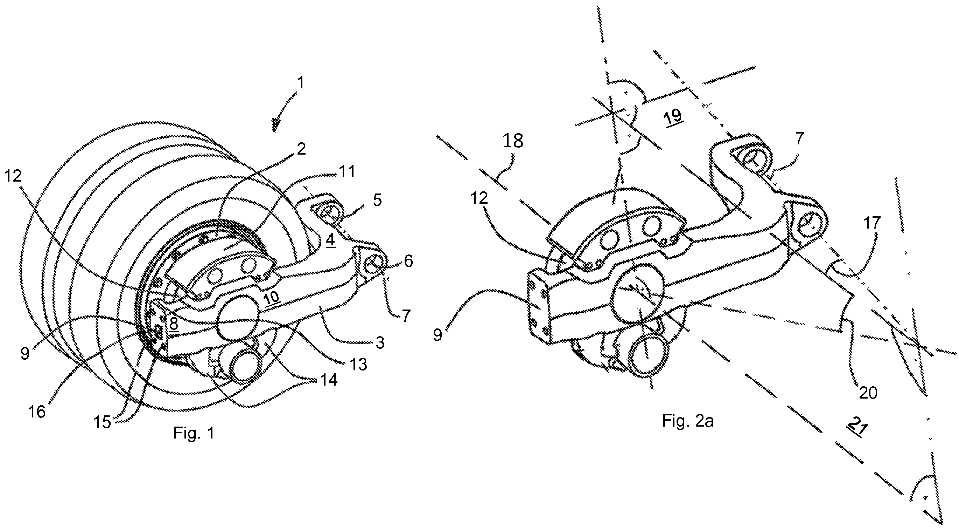

Fig. 1 zeigt eine Schräglenkerradaufhängung 1 für ein Rad eines Fahrzeugs, insbesondere für ein Hinterrad eines Nutzfahrzeugs (nicht dargestellt). Das Rad des Fahrzeugs ist über einen elektrischen Motor 2 in Gestalt eines Radnabenantriebs angetrieben. Ferner ist eine Schwinge 3 zu abgebildet. Die Schwinge 3 hat einen ersten Bereich 4. Die Schwinge 3 ist in dem ersten Bereich 4 an dem Fahrzeug (in Fig. 1 nicht dargestellt) gelagert. Hierfür sind im ersten Bereich 4 zwei Durchgangsbohrungen 5, 6 vorgesehen, die eine Schwenkachse 7 der Schwinge 3 definieren. Ein zweiter Bereich 8 der Schwinge 3 dient zur Abstützung der Schwinge 3 am Fahrzeug. Für diesen Zweck ist am zweiten Bereich 8 eine Schnittstelle 9 in Gestalt einer äußeren Stirnfläche am zweiten Bereich 8 ausgebildet. Ferner ist ein dritter Bereich 10 zu sehen, der einen drehfesten Teil des Motors 2 trägt. Die Schwinge 3 ist ein aus Metall gefertigtes Gussteil, wobei der erste Bereich 4 der Schwinge 3 als Hohlkörper ausgebildet ist. Der zweite Bereich 8 und der dritte Bereich 10 der Schwinge 3 sind in Vollmaterial ausgebildet. Beim Ausführungsbeispiel nach Fig. 1 ist der dritte Bereich 10 zentral zwischen dem ersten Bereich 4 und dem zweiten Bereich 8 angeordnet. Aufgrund der Hebelwirkung der Schwinge 3 führt diese Ausgestaltung zu einer geringeren Belastung der Schräglenkerradaufhängung 1 und ist somit kinematisch vorteilhaft. Allerdings könnte ebenso der zweite Bereich 8 zwischen dem ersten Bereich 4 und dem dritten Bereich 10 angeordnet sein.

Der drehfeste Teil des Motors 2 wird von dem dritten Bereich 10 der Schwinge 3 insbesondere drehfest getragen. Hierzu umfasst der dritte Bereich 10 eine nach außen gerichtete kegelförmige Fläche (in Fig. 1 nicht zu sehen), auf die der drehfeste Teil des Motors 2 aufgepresst ist. Somit kann der drehfeste Teil des Motors 1 mit einem drehenden Teil des Motors 2 zusammenwirken, um auf das Rad ein Drehmoment zu übertragen, wobei das Rad seinerseits drehfest mit dem drehenden Teil des Motors 2 verbunden ist.

Am dritten Bereich 10 der Schwinge 3 ist ferner eine erste Bremsvorrichtung 11 angebracht. Die erste Bremsvorrichtung 11 ist in Gestalt eines Bremssattels für eine Scheibenbremse ausgestaltet und über Schraubverbindungen (in Fig. 1 nicht zu sehen) an der Schwinge 3 fixiert. Der Bremssattel wirkt mit einer Bremsscheibe 12 zusammen, die drehfest mit dem drehenden Teil des Motors 2 verbunden ist. Außerdem sind an der Schwinge 3 Materialanhäufungen 13 zu erkennen, die die Bremsscheibe 12 zumindest in teilweise umschließen und somit vor mechanischen Störeinflüssen schützen.

Zudem ist am dritten Bereich 10 auch ein Bremsadapter 14 für eine zweite Bremsvorrichtung (in Fig. 1 nicht dargestellt) angebracht, insbesondere für eine Parkbremseinrichtung in Gestalt einer Feststellbremse. Es lassen sich verschiedenartige Bremsadapter 14 für verschiedenartige Bremsvorrichtungen an der Schwinge 3 anbringen.

Die Schnittstelle 9 dient zur Abstützung der Schwinge 3 am Fahrzeug beziehungsweise zur Anbindung von unterschiedlichen Arten von Schwingungsaufnehmern (in Fig. 1 nicht dargestellt). Die Schnittstelle 9 ist als eine von dem ersten Bereich 10 weg zeigende Stirnfläche der Schwinge 3 ausgebildet und umfasst Bohrungen 15 für Befestigungselemente (in Fig. 1 nicht dargestellt), um Schwingungsaufnehmer oder Adapter (in Fig. 1 nicht dargestellt) an der Schnittstelle 9 anzubringen. Auf der Stirnfläche ist beispielhaft eine Aussparung 16 dargestellt, um beispielsweise den Adapter auszurichten und Kräfte zwischen dem Adapter und der Schnittstelle übertragen. In Fig. 1 ist die Aussparung 16 in Gestalt einer rechteckigen Vertiefung ausgebildet, wobei je nach Anwendungsfall andere zweckmäßige Ausgestaltungen von Vertiefungen oder Materialhäufungen einerseits auf der Schnittstelle 9 mit entsprechend dazu passenden Materialhäufungen oder Vertiefungen auf dem Adapter möglich sind.

Nunmehr bezugnehmend auf Fig. 2a ist die Schwinge 3 als Schräglenkerschwinge für eine Schräglenkerradaufhängung ausgebildet. Hierbei ist die Schwinge 3 mit einem Pfeilungswinkel 17 angeordnet, der in einem ersten Winkelbereich zwischen 10° und 25° liegt. Der Pfeilungswinkel 17 ist der Winkel zwischen der Schwenkachse 7 und einer Fahrzeugquerachse 18 in einer horizontalen Ebene 19. Ferner ist die Schwinge 3 mit einem Dachwinkel 20 angeordnet, der in einem zweiten Winkelbereich zwischen 0° und 5° liegt. Der Dachwinkel 12 ist der Winkel zwischen der Schwenkachse 7 und der Fahrzeugquerachse 18 in einer vertikalen Ebene 21.

Die schräge Aufhängung - also die Lagerung der Schwinge 3 am Fahrzeug - erfolgt dabei an den Durchgangsbohrungen 5, 6 mittels zweier Gummilager (nicht dargestellt) im ersten Bereich 4 der Schwinge 3. Die Gummilager sind entweder direkt mit einer Aufnahme am Rahmen des Fahrzeugs befestigt oder zur Optimierung des Fahrkomforts an einem Hilfsrahmen gelagert. Ferner kann entlang der Schwenkachse 7 eine Drehstabfeder zur weiteren Federung zwischen mindestens einem der Gummilager und dem Rahmen oder Hilfsrahmen angebracht sein (nicht dargestellt).

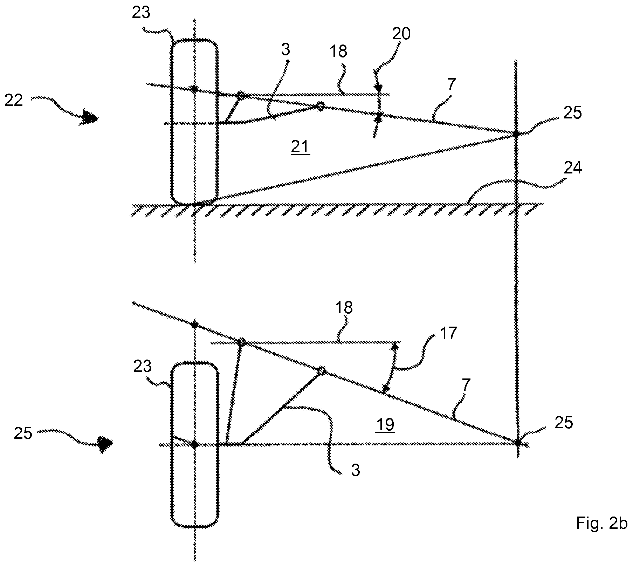

Noch deutlicher wird die Funktionsweise einer Schräglenkerradaufhängung sowie das Verhältnis zwischen Pfeilungswinkel 17 und Dachwinkel 18 bei Betrachtung von Fig. 2b. Der obere Teil 22 der Fig. 2b zeigt eine Ansicht in der vertikalen Ebene 21. Das Rad 23 steht auf der Fahrbahn 24. Die Schwinge 3 der Schräglenkerradaufhängung definiert eine Schwenkachse 7, auf der ein Momentanpol 25 des Rads 23 liegt. Die Schwinge 3 ist in der vertikalen Ebene 21 um den Dachwinkel 20 gekippt.

Der untere Teil 25 der Fig. 2b zeigt eine Ansicht in der horizontalen Ebene 19, also von oben. Auch im unteren Teil der Fig. 2b ist die Schwenkachse 7 gekippt, nämlich in der horizontalen Ebene 19 um den Pfeilungswinkel 17 in Bezug auf diee Fahrzeugquerachse 18. Durch Vergrößern des Pfeilungswinkels 17 sinkt die Sturzänderung beim Einfedern. Ferner erhöht sich das Wankzentrum, wobei das Wankzentrum durch eine Änderung des Dachwinkels 20 wieder abgesenkt werden kann. Durch Verkleinern des Pfeilungswinkels 17 oder durch Vergrößern des Dachwinkels 20 hingegen lässt sich eine günstigere Bremsnickabstützung erreichen.

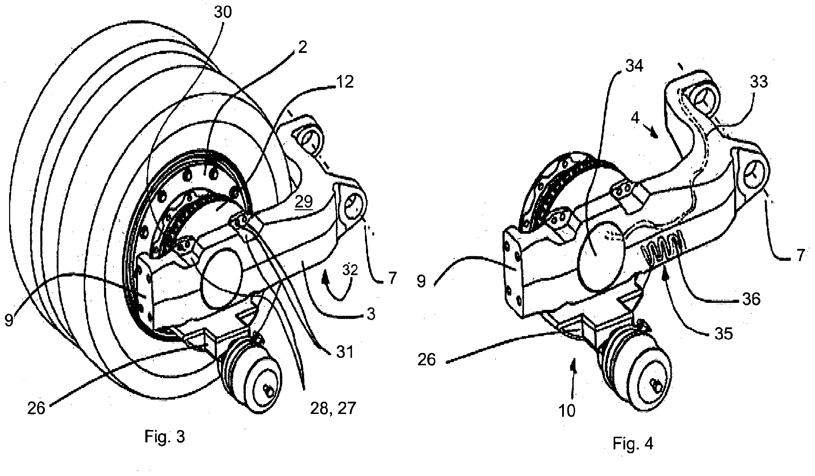

Fig. 3 zeigt die Schräglenkerradaufhängung 1 mit einer pneumatischen Bremsvorrichtung als zweite Bremsvorrichtung 26. Da die als Bremssattel ausgebildete erste Bremsvorrichtung 11 in Fig. 3 fehlt, ist die mit dem drehenden Teil des Motors 2 drehfest verbundene Bremsscheibe 12 in Fig. 3 besser zu erkennen. Die Schnittstelle 27 für die erste Bremsvorrichtung 11 ist in Gestalt von zwei Aussparungen 28 auf einer Oberseite 29 der Schwinge 3 ausgebildet. An den Aussparungen 28 befinden sich zwei radseitig angeordnete Seitenwände 30 mit jeweils zwei Durchgangsbohrungen 31 für Befestigungsmittel, mit denen die erste Bremsvorrichtung - beispielsweise ein Bremssattel - an der Oberseite 29 der Schwinge 3 befestigt werden kann (in Fig. 3 nicht dargestellt). Auf einer Unterseite 32 der Schwinge 3 ist anstelle eines Bremsadapters (in Fig. 3 nicht dargestellt) eine zweite Bremsvorrichtung 26 angebunden, die als pneumatische Bremsvorrichtung ausgebildet ist. Denkbar ist jedoch auch der umgekehrte Fall, bei dem eine erste Bremsvorrichtung in Gestalt eines Bremssattels auf der Unterseite 32 der Schwinge 3 angekoppelt ist und eine zweite Bremsvorrichtung auf der Oberseite 29 der Schwinge 3 angekoppelt ist, oder andere Ausgestaltungen mit zwei Bremsvorrichtungen auf der Oberseite 29 und der Unterseite 32 der Schwinge 3 (in Fig. 3 nicht dargestellt).

In Fig. 4 ist eine Leitung 33 angedeutet, die entlang der Schwinge 3 verläuft. Die Leitung 33 kann an der Schwinge 3 befestigt oder in einer Aussparung der Schwinge 3 angeordnet sein. Im vorliegenden Ausführungsbeispiel verläuft ist die Leitung 33 durch den ersten Bereich 4 und den dritten Bereich 10 der Schwinge 3 bis hin zu einem Durchgang 34. Der Durchgang 34 verläuft durch die Schwinge 8 und ermöglicht eine Führung der Leitung 33 bis hinein in ein Inneres der Radnabe.

Ferner sind in Fig. 4 in der Schwinge 3 Leitungen die Schwinge 3 integrierte Kanäle 35 zu sehen, die in Gestalt eines Wärmetauschers angeordnet sind. Hierbei können innerhalb und/oder außerhalb der Schwinge Rippen 36 des Wärmetausches vorgesehen sein, wobei die Rippen in Fig. 4 insbesondere innerhalb der Schwinge 3 verlaufen. Die Rippen 36 lassen sich insbesondere in den ersten Bereich 4 der Schwinge 3 integrieren, der als mit Rippen 36 durchzogener Hohlkörper ausgestaltet werden kann.

Mit einem solchen Wärmetauscher lässt sich die Kühlung des Motors (in Fig. 4 nicht dargestellt) optimieren. Aufgrund der Ausbildung der Rippen 36 und Leitungen des Wärmetauschers als in die Schwinge 3 integrierte Kanäle 35 kann die Teilevielfalt gesenkt werden. Weiterhin kann die Wärmeübertragung innerhalb des Wärmetauschers nah am Rad stattfinden, ohne dass Kühlmittel über lange Strecken hinweg gefördert werden muss und der für den Betrieb des Wärmetauschers erforderliche Temperaturunterschied dadurch absinkt.

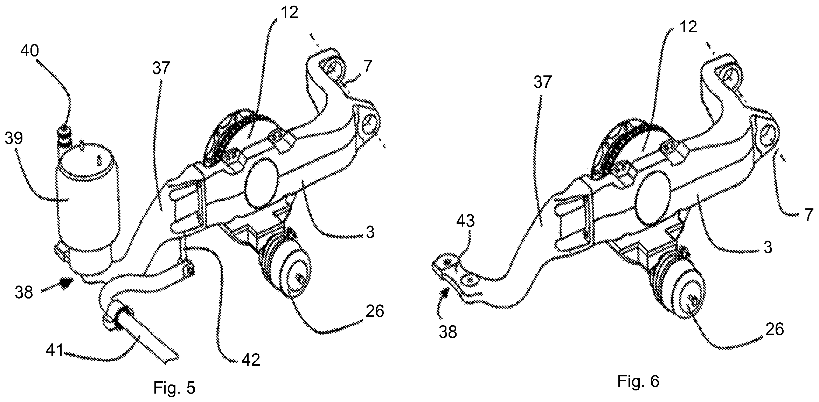

In Fig. 5 ist eine Schräglenkerradaufhängung 1 zu sehen, bei der ein Schwingungsaufnehmer über einen Adapter 37 an der Schnittstelle 9 angebunden ist. Der Schwingungsaufnehmer ist als eine pneumatische Feder-Dämpfer-Vorrichtung ausgebildet. Der Adapter 37 ist als eine Verlängerung der Schwinge 3 ausgebildet und läuft in Richtung weg von der Schwinge zu einem Ende 38 hin zu. An dem Ende 38 des Adapters 37 ist ein Luftfederelement 39 und ein Dämpferelement 40 befestigt. Ein zusätzlicher mit dem Fahrzeug verbundener Stabilisator 41 dämpft Schwingungen der Schwinge 3 und wird mittels eines Stabilenkers 42 mit dem Adapter 37 verbunden.

Fig. 6 zeigt die Baugruppe aus Fig. 5 ohne Luftfederelement und Dämpferelement. Es ist zu sehen, dass das Ende 38 eine im Wesentlichen horizontale Fläche 43 aufweist, an der das Federelement und das Dämpferelement der pneumatischen Feder-Dämpfer-Vorrichtung 39, 40 ankoppelbar sind.

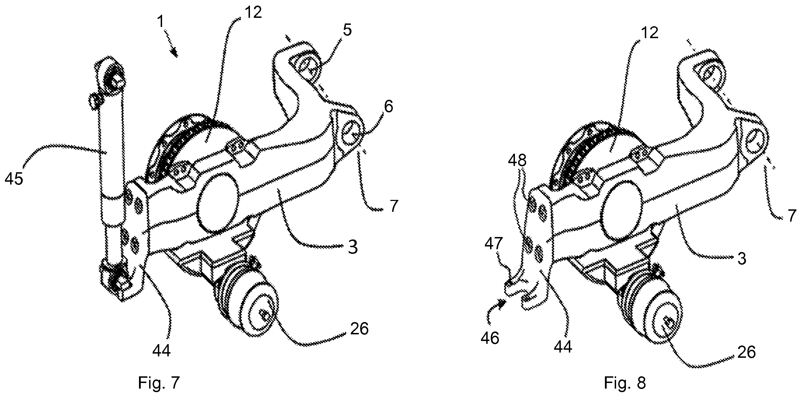

Die in Fig. 7 dargestellte Schräglenkerradaufhängung 1 weist einen Schwingungsaufnehmer auf, der über einen anderen Adapter 44 an der Schnittstelle 9 angebunden ist. Die Schwinge 3 sowie die Schnittstelle 9 für die Anbindung der Adapter 37, 44 muss hierfür nicht verändert werden. Auf diese Weise sind sowohl die Schnittstelle 9 als auch die Adapter 37, 44 ausgebildet, um ein Baukastensystem zu verwirklichen. Der Schwingungsaufnehmer ist eine hydropneumatische Feder-Dämpfer-Vorrichtung 45. Mit der hydropneumatischen Feder-Dämpfer-Vorrichtung 45 lassen sich Wankbewegungen in Kurven auch ohne einen zusätzlichen Stabilisator weitestgehend eliminieren. Steifigkeit und Schwingungsaufnahmeverhalten der hydropneumatischen Feder-Dämpfer-Vorrichtung 45 sind über einen großen Bereich einstell- und regelbar und lassen sich damit nahezu unabhängig von der Beladung des Fahrzeugs konstant halten. Zur Anbindung der hydropneumatischen Feder-Dämpfer-Vorrichtung 45 ist der Adapter 44 in Gestalt eines Plättchens zur Lagerung der hydropneumatische Feder-Dämpfer-Vorrichtung ausgebildet.

In Fig. 8 - ohne hydropneumatische Feder-Dämpfer-Vorrichtung - ist zu sehen, dass der als Plättchen ausgebildete Adapter 44 an seinem unteren Ende eine in Gestalt zweier Erhöhungen ausgebildete Lagergabel 46 aufweist, die jeweils mit Lagerpunkten für eine gelenkige Lagerung der der hydropneumatische Feder-Dämpfer-Vorrichtung ausgebildet sind. Der als Plättchen ausgebildete Adapter 44 kann - ebenso wie der zuvor unter Bezugnahme auf die Fign. 5 und 6 beschriebene Adapter 37 - über Schraubverbindungen 48 an der Schnittstelle 9 befestigt werden, und ist im vorliegenden Ausführungsbeispiel über vier in einem Viereck angeordnete Schraubenverbindungen 48 an der Schnittstelle 9 befestigt.

Die in Verbindung mit den Fign. 5 bis 8 beschriebenen beispielhaften Ausgestaltungen 37, 44 der Adapter zeigen auf, wie sich die Schnittstelle 9 der Schwinge 3 zur Anbindung unterschiedlicher Arten von Schwingungsaufnehmern 39, 40, 45 eignet. Die Schnittstelle 9 der Schwinge 3 ist angepasst, um daran einen von einer Mehrzahl von sich unterscheidenden Adaptern 37, 44 zu befestigen, die beispielsweise für die Verwendung mit einer pneumatischen Feder-Dämpfer-Vorrichtung 39, 40, mit einer hydropneumatischen Feder-Dämpfer-Vorrichtung 45, oder mit elektrischen, elektromechanischen oder elektrohydraulischen Feder-Dämpfer-Vorrichtungen angepasst sein können. Auf diese Weise ist ein Baukastensystem verwirklicht.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

### Bezugszeichenliste

- 1: Schräglenkerradaufhängung
- 2: Motor
- 3: Schwinge
- 4: Erster Bereich
- 5: Durchgangsbohrung
- 6: Durchgangsbohrung
- 7: Schwenkachse
- 8: Zweiter Bereich
- 9: Schnittstelle (Schwingungsaufnehmer)
- 10: Dritter Bereich
- 11: Erste Bremsvorrichtung
- 12: Bremsscheibe
- 13: Materialanhäufungen
- 14: Bremsadapter
- 15: Bohrungen
- 16: Aussparung (Adapter)
- 17: Pfeilungswinkel
- 18: Fahrzeugquerachse
- 19: Horizontale Ebene
- 20: Dachwinkel
- 21: Vertikale Ebene
- 22: Oberer Teil von Fig. 2b
- 23: Rad
- 24: Fahrbahn
- 25: Unterer Teil von Fig. 2b
- 26: Zweite Bremsvorrichtung
- 27: Schnittstelle (erste Bremsvorrichtung)
- 28: Aussparung (erste Bremsvorrichtung)
- 29: Oberseite
- 30: Seitenwand
- 31: Durchgangsbohrung
- 32: Unterseite
- 33: Leitung
- 34: Durchgang
- 35: Integrierte Kanäle
- 36: Rippen
- 37: Adapter (pneumatischer Schwingungsaufnehmer)
- 38: Ende
- 39: Luftfederelement
- 40: Dämpferelement
- 41: Stabilisator
- 42: Stabilenker
- 43: Horizontale Fläche
- 44: Adapter (hydropneumatischer Schwingungsaufnehmer)
- 45: Hydropneumatische Feder-Dämpfer-Vorrichtung
- 46: Lagergabel
- 47: Lagerpunkt
- 48: Schraubverbindungen

## Patentansprüche

1. Schräglenkerradaufhängung (1) für ein über einen elektrischen oder pneumatischen Motor (2) angetriebenes Rad (23) eines Fahrzeugs, insbesondere Hinterrad eines Nutzfahrzeugs, mit
einem elektrischen oder pneumatischen Motor (2), und
einer Schräglenkerschwinge (3), die in einem ersten Bereich (4) an dem Fahrzeug gelagert ist, und in einem zweiten Bereich (8) über einen Schwingungsaufnehmer (39, 40, 45) an dem Fahrzeug abgestützt ist,
wobei der Motor (2) als Radnabenantrieb ausgebildet ist, und
wobei die Schräglenkerschwinge eine Schnittstelle zur Anbindung von unterschiedlichen Arten von Schwingungsaufnehmern (39, 40, 45) aufweist,
**dadurch gekennzeichnet, dass**
an einem dritten Bereich (10) der Schwinge (3) eine erste Bremsvorrichtung (11) und eine zweite Bremsvorrichtung (26) angebracht sind.

2. Schräglenkerradaufhängung (1) nach Anspruch 1, wobei der Schwingungsaufnehmer (39, 40, 45) direkt oder über einen Adapter (37, 44) an der Schnittstelle (9) angebunden ist.

3. Schräglenkerradaufhängung (1) nach Anspruch 2, **dadurch gekennzeichnet, dass** die Schnittstelle (9) angepasst ist, um daran einen von einer Mehrzahl von sich unterscheidenden Adaptern (37, 44) zu befestigen, wobei insbesondere jeder der unterschiedlichen Adapter (37, 44) jeweils angepasst ist, um einen oder mehrere von sich unterscheidenden Schwingungsaufnehmern (39, 40, 45) daran anzubringen.

4. Schräglenkerradaufhängung (1) nach Anspruch 2 oder 3, **dadurch gekennzeichnet, dass** die Schnittstelle (9) Aussparungen (16) und/oder Materialanhäufungen umfasst, die den Adapter (37, 44) ausrichten und/oder Kräfte übertragen.

5. Schräglenkerradaufhängung (1) nach einem der Ansprüche 2 bis 4, **dadurch gekennzeichnet, dass** die Schnittstelle (9) als eine von dem ersten Bereich (4) weg zeigende Stirnfläche der Schräglenkerschwinge (3) ausgebildet ist und Bohrungen (15) für Befestigungselemente umfassen kann.

6. Schräglenkerradaufhängung (1) nach einem der Ansprüche 2 bis 5, **dadurch gekennzeichnet, dass** die Schnittstelle (9) und/oder der Adapter (37, 44) ausgebildet sind, um ein Baukastensystem zu verwirklichen.

7. Schräglenkerradaufhängung (1) nach einem der Ansprüche 1 bis 6, **dadurch gekennzeichnet, dass** der Schwingungsaufnehmer eine pneumatische Feder-Dämpfer-Vorrichtung (39, 40) ist.

8. Schräglenkerradaufhängung (1) nach Anspruch 7, **dadurch gekennzeichnet, dass** der Adapter (37) als eine Verlängerung der Schräglenkerschwinge (3) ausgebildet ist und in Richtung weg von der Schräglenkerschwinge (3) zuläuft, und an seinem Ende eine im Wesentlichen horizontale Fläche (43) aufweist, an der ein Federelement (39) und ein Dämpferelement (40) der pneumatischen Feder-Dämpfer-Vorrichtung (39, 40) angekoppelt sind.

9. Schräglenkerradaufhängung (1) nach einem der Ansprüche 1 bis 6, **dadurch gekennzeichnet, dass** der Schwingungsaufnehmer eine hydraulische, hydropneumatische (45), elektrische, elektromechanische oder elektrohydraulische Feder-Dämpfer-Vorrichtung ist.

10. Schräglenkerradaufhängung (1) nach den Ansprüchen 9 und 2, **dadurch gekennzeichnet, dass** der Adapter in Gestalt eines Plättchens ausgebildet ist, das an einem unteren Ende eine in Gestalt zweier Erhöhungen ausgebildete Lagergabel für die Feder-Dämpfer-Vorrichtung aufweisen kann.

11. Schräglenkerradaufhängung (1) nach einem der Ansprüche 1 bis 10, **dadurch gekennzeichnet, dass** ein dritter Bereich (10) der Schräglenkerschwinge (3) einen gegenüber der Schräglenkerschwinge (3) drehfesten Teil des Motors (2) trägt, um mit einem drehenden Teil des Motors (2) auf das Rad ein Drehmoment zu übertragen.

12. Schräglenkerradaufhängung (1) nach Anspruch einem der Ansprüche 1 bis 11, **dadurch gekennzeichnet, dass** die Schräglenkerschwinge (3) mit einem Pfeilungswinkel (17) angeordnet ist, der in einem ersten Winkelbereich zwischen 10 ° und 25° liegt, und mit einem Dachwinkel (20) angeordnet ist, der in einem zweiten Winkelbereich zwischen 0° und 5° liegt.

13. Schräglenkerradaufhängung (1) nach einem der Ansprüche 11 oder 12, **dadurch gekennzeichnet, dass** der erste Bereich (4) der Schräglenkerschwinge (3) als Hohlkörper ausgebildet ist und der dritte Bereich (10) der Schräglenkerschwinge (3) in Vollmaterial ausgebildet ist, und die Schräglenkerschwinge (3) aus Metall, vorzugsweise als Gussteil gefertigt ist, und/oder die Lagerung der Schräglenkerschwinge am Fahrzeug mittels zweier Gummilager im ersten Bereich (4) der Schräglenkerschwinge (3) ausgebildet ist, die direkt oder über einen Hilfsrahmen an der Karosserie gelagert sind, vorzugsweise über eine Drehstabfeder.

## Claims

1. Semi-trailing arm wheel suspension (1) for a wheel (23), which is driven by means of an electric or pneumatic motor (2), of a vehicle, in particular a rear wheel of a utility vehicle, having an electric or pneumatic motor (2), and
a semi-trailing arm rocker (3) which is supported in a first region (4) on the vehicle and in a second region (8) on the vehicle by means of a vibration absorber (39, 40, 45), wherein the motor (2) is in the form of a wheel hub drive, and
wherein the semi-trailing arm rocker has an interface for connecting different types of vibration absorbers (39, 40, 45),
**characterised in that**
in a third region (10) of the rocker (3) a first brake apparatus (11) and a second brake apparatus (26) are fitted.

2. Semi-trailing arm wheel suspension (1) according to claim 1, wherein the vibration absorber (39, 40, 45) is connected to the interface (9) directly or by means of an adapter (37, 44) .

3. Semi-trailing arm wheel suspension (1) according to claim 2, **characterised in that** the interface (9) is adapted to secure one of a plurality of different adapters (37, 44) thereto, wherein in particular each of the different adapters (37, 44) is adapted in each case to fit one or more different vibration absorbers (39, 40, 45) thereto.

4. Semi-trailing arm wheel suspension (1) according to claim 2 or 3, **characterised in that** the interface (9) comprises recesses (16) and/or material accumulations which orientate the adapter (37, 44) and/or transmit forces.

5. Semi-trailing arm wheel suspension (1) according to any one of claims 2 to 4, **characterised in that** the interface (9) is in the form of an end face, which faces away from the first region (4), of the semi-trailing arm rocker (3) and may comprise holes (15) for securing elements.

6. Semi-trailing arm wheel suspension (1) according to any one of claims 2 to 5, **characterised in that** the interface (9) and/or the adapter (37, 44) are constructed to implement a modular system.

7. Semi-trailing arm wheel suspension (1) according to any one of claims 1 to 6, **characterised in that** the vibration absorber is a pneumatic spring/damper apparatus (39, 40).

8. Semi-trailing arm wheel suspension (1) according to claim 7, **characterised in that** the adapter (37) is in the form of an extension of the semi-trailing arm rocker (3) and tapers in the direction away from the semi-trailing arm rocker (3) and at the end thereof has a substantially horizontal face (43) to which a resilient element (39) and a damper element (40) of the pneumatic spring/damper apparatus (39, 40) are coupled.

9. Semi-trailing arm wheel suspension (1) according to any one of claims 1 to 6, **characterised in that** the vibration absorber is a hydraulic, hydropneumatic (45), electric, electromechanical or electrohydraulic spring/damper apparatus.

10. Semi-trailing arm wheel suspension (1) according to claims 9 and 2, **characterised in that** the adapter is in the form of a platelet which may at a lower end thereof have a bearing fork which is in the form of two projections for the spring/damper apparatus.

11. Semi-trailing arm wheel suspension (1) according to any one of claims 1 to 10, **characterised in that** a third region (10) of the semi-trailing arm rocker (3) carries a portion of the motor (2) which is rotationally secure with respect to the semi-trailing arm rocker (3) in order to transmit a torque to the wheel with a rotating portion of the motor (2).

12. Semi-trailing arm wheel suspension (1) according to any one of claims 1 to 11, **characterised in that** the semi-trailing arm rocker (3) is arranged with a sweep angle (17) which is in a first angular range between 10° and 25° and is arranged with a roof angle (20) which is in a second angular range between 0° and 5°.

13. Semi-trailing arm wheel suspension (1) according to either claim 11 or 12, **characterised in that** the first region (4) of the semi-trailing arm rocker (3) is in the form of a hollow member and the third region (10) of the semi-trailing arm rocker (3) is made from solid material, and the semi-trailing arm rocker (3) is produced from metal, preferably as a cast component, and/or the support of the semi-trailing arm rocker on the vehicle is formed by means of two rubber bearings in the first region (4) of the semi-trailing arm rocker (3) which are supported on the body directly or by means of an auxiliary frame, preferably by means of a double-acting torsion bar.

## Revendications

1. Suspension de roue à bielle oblique (1) pour une roue (23), entraînée par un moteur électrique ou pneumatique (2) d'un véhicule, plus particulièrement une roue arrière d'un véhicule utilitaire, avec
un moteur électrique ou pneumatique (2) et
un bras oscillant de bielle oblique (3), qui est logé dans une première partie (4) sur le véhicule et qui est soutenu, sur le véhicule, dans une deuxième partie (8), par l'intermédiaire d'un absorbeur de vibrations (39, 40, 45),
dans laquelle le moteur (2) est conçu comme un entraînement de moyeu de roue et
dans laquelle le bras oscillant de bielle oblique comprend une interface pour la liaison de différents types d'absorbeurs de vibrations (39, 40, 45),
**caractérisée en ce que**
au niveau d'une troisième partie (10) du bras oscillant (3), sont montés un premier dispositif de freinage (11) et un deuxième dispositif de freinage (26),

2. Suspension de roue à bielle oblique (1) selon la revendication 1, dans laquelle l'absorbeur de vibrations (39, 40, 45) est relié à l'interface (9) directement ou par l'intermédiaire d'un adaptateur (37, 44).

3. Suspension de roue à bielle oblique (1) selon la revendication 2, **caractérisée en ce que** l'interface (9) est conçue afin de pouvoir y fixer un parmi une pluralité d'adaptateurs (37, 44) différents, dans laquelle, plus particulièrement, chacun des différents adaptateurs (37, 44) est conçu afin de pouvoir y monter un parmi différents absorbeurs de vibrations (30, 40, 45).

4. Suspension de roue à bielle oblique (1) selon la revendication 2 ou 3, **caractérisée en ce que** l'interface (9) comprend des évidements (16) et/ou des suspensions de matériel qui orientent l'adaptateur (37, 44) et/ou transmettent des forces.

5. Suspension de roue à bielle oblique (1) selon l'une des revendications 2 à 4, **caractérisée en ce que** l'interface (9) est conçue comme une face frontale du bras oscillant de la bielle oblique (3), orientée de manière opposée à la première partie (4), et peut comprendre des perçages (15) pour des éléments de fixation.

6. Suspension de roue à bielle oblique (1) selon l'une des revendications 2 à 5, **caractérisée en ce que** l'interface (9) et/ou l'adaptateur (37, 44) sont conçus afin de pouvoir réaliser un système modulaire.

7. Suspension de roue à bielle oblique (1) selon l'une des revendications 1 à 6, **caractérisée en ce que** l'absorbeur de vibrations est un dispositif d'amortisseur à ressort pneumatique (39, 40).

8. Suspension de roue à bielle oblique (1) selon la revendication 7, **caractérisée en ce que** l'adaptateur (37) est conçu comme un prolongement du bras oscillant de bielle oblique (3) et s'éloigne du bras oscillant de bielle oblique (3) et comprend, au niveau de son extrémité, une surface globalement horizontale (43), à laquelle sont couplés un élément de ressort (39) et un élément d'amortisseur (40) de l'amortisseur à ressort pneumatique (39, 40).

9. Suspension de roue à bielle oblique (1) selon l'une des revendications 1 à 6, **caractérisée en ce que** l'absorbeur de vibrations est un dispositif d'amortisseur à ressort hydraulique, hydropneumatique (45), électrique, électromécanique ou électrohydraulique.

10. Suspension de roue à bielle oblique (1) selon les revendications 9 et 2, **caractérisée en ce que** l'adaptateur présente la forme d'une plaquette qui peut présenter, au niveau de son extrémité inférieure, une fourche de logement, qui présente la forme de deux bossages, pour le dispositif d'amortisseur à ressort.

11. Suspension de roue à bielle oblique (1) selon l'une des revendications 1 à 10, **caractérisée en ce qu'**une troisième partie (10) du bras oscillant de bielle oblique (3) supporte une partie du moteur (2), fixe en rotation par rapport au bras oscillant de bielle oblique (3), afin de transmettre un couple à la roue avec une partie rotative du moteur (2).

12. Suspension de roue à bielle oblique (1) selon l'une des revendications 1 à 11, **caractérisée en ce que** le bras oscillant de bielle oblique (3) est disposé avec un angle de flèche (17) qui se trouve dans une première plage angulaire entre 10° et 25° et avec un angle de toit (20) qui se trouve dans une deuxième plage angulaire entre 0° et 5°.

13. Suspension de roue à bielle oblique (1) selon l'une des revendications 11 ou 12, **caractérisée en ce que** la première partie (4) du bras oscillant de bielle oblique (3) est conçue comme un corps creux et la troisième partie (10) du bras oscillant de bielle oblique (3) est conçue comme un matériau massif, et le bras oscillant de bielle oblique (3) est constitué de métal, de préférence d'une pièce en fonte et/ou le logement du bras oscillant de bielle oblique sur le véhicule est réalisé au moyen de deux paliers en caoutchouc dans la première partie (4) du bras oscillant de bielle oblique (3), qui sont logés, directement ou par l'intermédiaire d'un cadre auxiliaire, sur la carrosserie, de préférence par l'intermédiaire d'un ressort de torsion.
